# FASCICULE DE BREVET EUROPEEN

(11) **EP 0 969 349 B1**
(45) Date de publication et mention de la délivrance du brevet: **09.08.2006**
(21) Numéro de dépôt: 99401549.3
(22) Date de dépôt: 22.06.1999
(51) Int. Cl.: G06F 1/03

(54) **Synthetiseur numerique de signaux**
Digitaler Signalsynthetisierer
Digital signal synthesiser

(30) Priorité: 03.07.1998 FR 9808553
(43) Date de publication de la demande: 05.01.2000
(73) Titulaire: Thales, 75008 Paris (FR)
(72) Inventeur: Gabet, Pascal, 94117 Arcueil Cedex (FR); de Gouy, Jean-Luc, 94117 Arcueil Cedex (FR)

(56) Documents cités:
- EP-A- 0 887 941
- WO-A-89/06009

## Description

La présente invention concerne un synthétiseur numérique de signaux. Elle s'applique notamment pour la synthèse numérique directe de fréquence, par exemple dans le domaine des techniques radar ou dans le domaine de l'instrumentation.

La synthèse numérique directe est une technique de synthèse de fréquence qui consiste à élaborer en valeurs numériques les échantillons d'un signal que l'on veut générer et à convertir ces échantillons en signaux analogiques grâce à un convertisseur numérique-analogique. Les synthétiseurs de signaux obtenus par cette technique sont très attractifs en ce qui concerne leur volume, leur poids et leur consommation d'énergie car ils peuvent bénéficier d'une intégration importante. Leurs autres avantages sont notamment une très grande résolution et des temps de commutation très faibles d'une fréquence à l'autre.

En général, le convertisseur numérique-analogique possède une résolution inférieure au nombre N de bits du signal numérique utile, élaboré en vue de sa conversion en signal analogique. Le passage de N bits à M bits, qui est la résolution du convertisseur numérique-analogique, génère une erreur de quantification. Du fait de cette quantification, la fonction de transfert du convertisseur numérique-analogique, c'est-à-dire la tension de sortie du convertisseur en fonction des mots numériques d'entrée, est une fonction en escalier.

Un tel synthétiseur numérique de signaux est décrit au document WO-A-89/06009, synthétiseur comprenant des moyens d'addition d'un signal de bruit pseudo-aléatoire pour la reduction du bruit résultant de la troncature. Ce synthétiseur comporte des moyens de génération des échantillons d'un signal numérique utile à convertir, codé sur k bits, en signal analogique en fonction d'un mot de commande de fréquence, des moyens de génération d'un signal de bruit codé sur n bits, et un convertisseur analogique-numérique, le signal utile et le signal de bruit étant additionnés par un additionneur au k-t bits de poids faible du signal utile, t bits de poids forts du résultat de l'addition étant convertis en signal analogique par le convertisseur numérique-analogique, t étant inférieur a K, et ies moyens de génération d'un signal de bruit comportant des moyens de génération d'un bruit blanc échantillonné et équiprobable.

Dans ces synthétiseurs numériques, la pureté spectrale est par ailleurs limitée par les non-linéarités des convertisseurs numérique-analogique qu'ils comportent. Les non-linéarités désignent le fait que les marches d'escalier de la fonction de transfert du convertisseur numérique-analogique ne sont pas d'égales hauteurs et que la transition entre marches produit des phénomènes irréguliers. Ces non-linéarités entraînent la génération de fréquences harmoniques qui sont repliées du fait de l'échantillonnage. Des raies parasites sont ainsi créées, une raie parasite étant une composante spectrale située à des fréquences différentes de celle de la composante fondamentale du signal à synthétiser.

Un but de l'invention est de permettre d'améliorer la pureté spectrale des synthétiseurs numériques de signaux en réduisant l'effet des non-linéarités des convertisseurs numérique-analogique qu'ils comportent. A cet effet, l'invention a pour objet un synthétiseur de signaux comportant des moyens de génération des échantillons d'un signal numérique à convertir, codé sur N bits, en signal analogique en fonction d'un mot de commande de fréquence, des moyens de génération d'un signal de bruit, le signal utile et le signal de bruit étant additionnés par un additionneur, M bits de poids fort du résultat de l'addition étant converti en signal analogique par le convertisseur numérique-analogique, M étant inférieur à N, les moyens de génération d'un signal de bruit comportant au moins des moyens de génération d'un bruit blanc échantillonné et équiprobable, caractérisé en ce que le signal de bruit est aussi codé sur N bits et en ce que les moyens de génération du signal de bruit comportent en plus ou moins des moyens d'interposition d'un zéro entre deux échantillons de bruit et des moyens de filtrage, à réponse impulsionnelle symétrique, des échantillons avec décalage d'une demi-période d'échantillonnage, de façon à ce que le bruit présente au moins une densité de bruit sensiblement égale à la loi équiprobable, cette densité étant nulle en dehors d'un espace donné, et l'histogramme du bruit étant stationnaire.

L'invention a pour principaux avantages qu'elle permet de réduire les bruits de troncature, qu'elle est simple à mettre en oeuvre et qu'elle est économique.

D'autres caractéristiques et avantages de l'invention apparaîtront à l'aide de la description qui suit faite en regard de dessins annexés qui représentent :
- la figure 1, par un synoptique, un premier exemple de mise en oeuvre d'un synthétiseur selon l'invention ;
- la figure 2, un exemple d'histogramme de bruit généré dans un synthétiseur selon l'invention ;
- la figure 3, un exemple de réalisation de moyens pour élaborer le signal numérique à convertir en signal analogique, à partir d'un mot de commande ;
- la figure 4, un exemple de réalisation de moyens de génération de bruit utilisés dans un synthétiseur selon l'invention ;
- la figure 5, un exemple de réponse impulsionnelle du filtrage utilisé dans les moyens précités ;
- la figure 6 un autre exemple de réalisation d'un synthétiseur selon l'invention comportant notamment un modulateur sigma-delta pour supprimer des raies parasites de troncature ;
- la figure 7 un autre exemple de réalisation d'un synthétiseur selon l'invention comportant notamment deux modulateurs sigma-delta pour supprimer des raies parasites de troncature ;
- la figure 8, un exemple de réalisation d'un modulateur sigma-delta utilisé par les exemples de réalisations précédents.

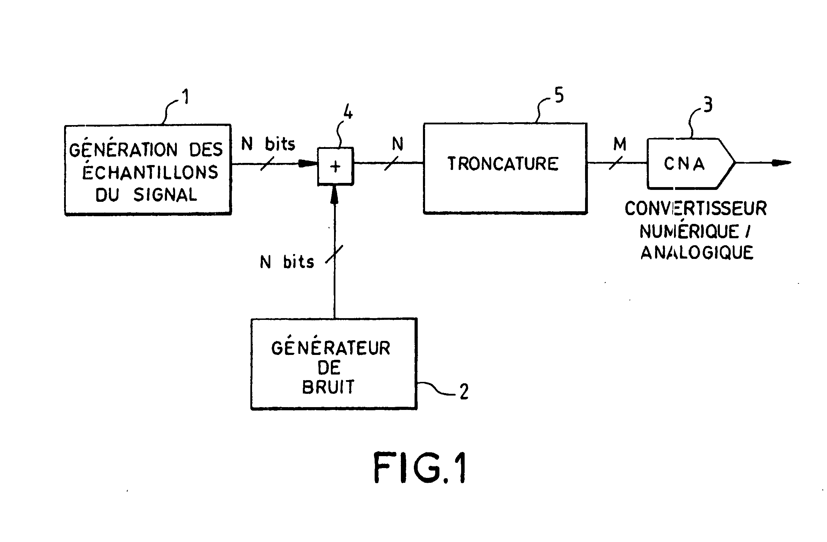

La figure 1 présente, par un synoptique, un premier mode de réalisation possible d'un synthétiseur selon l'invention. La synthèse d'un signal consiste notamment en la création d'un signal analogique à partir d'un mot de commande de fréquence, établi par exemple sous forme numérique. Il comporte notamment des moyens 1 de génération des échantillons du signal utile, des moyens 2 de génération d'échantillons de bruit et un convertisseur numérique-analogique 3. L'injection de bruit possédant un histogramme et une répartition spectrale particulière permet notamment de réduire les non-linéarités. Ce bruit présente en effet une amplitude voisine de celle du signal utile, de préférence égale ou supérieure. Il présente par ailleurs une densité de probabilité voisine de la loi équiprobable ou sensiblement égale, cette densité étant nulle en dehors d'un espace donné. Un filtre, non représenté, est par exemple câblé en sortie du convertisseur numérique-analogique 3 pour filtrer le bruit dû au générateur de bruit 2, et fournir ainsi le signal utile attendu. En général, le signal utile est à bande étroite et peut varier dans une bande de fréquence inférieure à la fréquence d'horloge, ce qui laisse un espace spectral disponible pour placer le bruit.

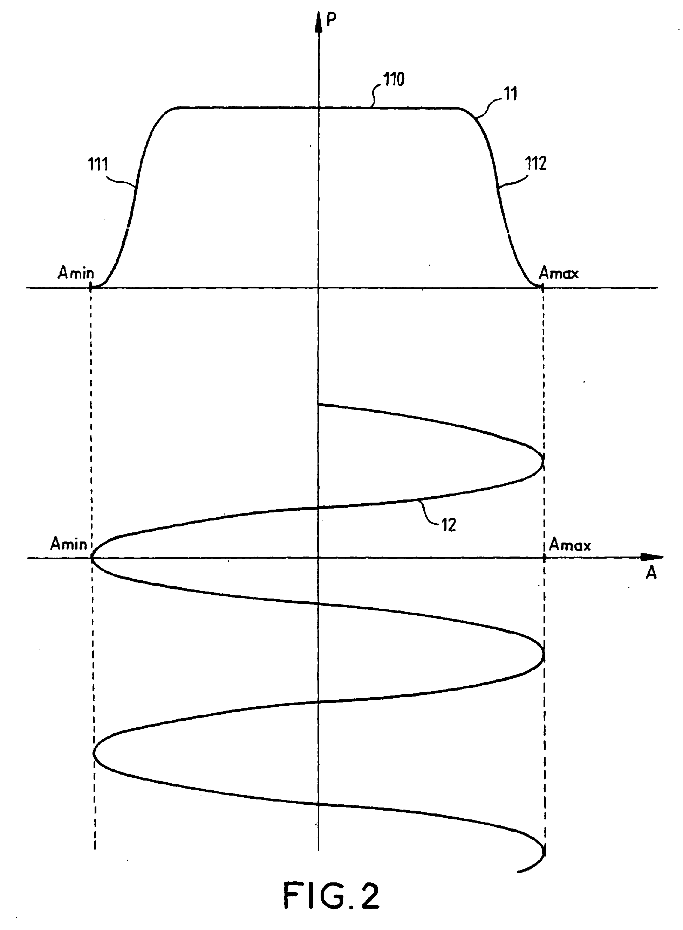

La figure 2 illustre un exemple d'histogramme du bruit généré par le générateur de bruit 2. La figure 2 présente une première courbe 11 qui représente en ordonnée la probabilité P que l'amplitude du bruit soit comprise dans un intervalle donné [A, A+dA]. A cet effet, l'axe des ordonnées représente la probabilité P d'apparition du bruit et l'axe des abscisses l'amplitude du bruit. L'amplitude du bruit est comprise entre une valeur Aₘᵢₙ et une valeur Aₘₐₓ définissant un intervalle [Aₘᵢₙ, Aₘₐₓ]. Ces valeurs sont sensiblement égales ou voisines des amplitudes minimum et maximum du signal utile voire supérieures à ces amplitudes, représenté par ailleurs par une courbe 12 évoluant entre les valeurs Aₘᵢₙ et Aₘₐₓ. La probabilité P du bruit est sensiblement constante sur l'intervalle compris entre ces valeurs Aₘᵢₙ et Aₘₐₓ. La densité de probabilité du bruit est donc sensiblement égale à une loi de densité équiprobable.

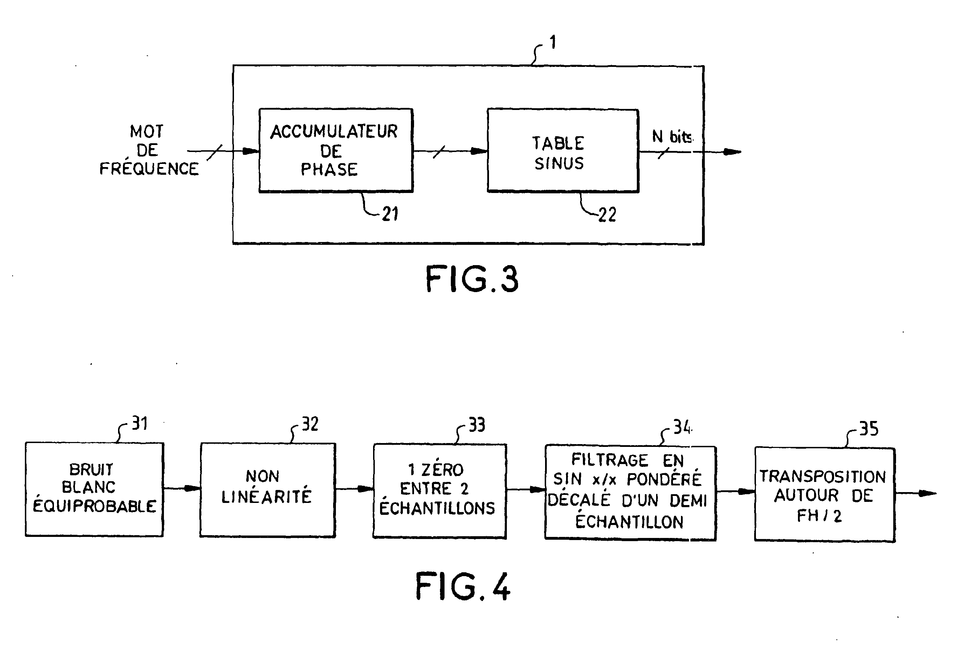

La figure 3 illustre un exemple de réalisation des moyens 1 de génération des échantillons du signal utile. Ce signal utile est le signal numérique à convertir en signal analogique. Les échantillons sont des données numériques. Les moyens de génération 1 comportent par exemple, dans le cas particulier d'un signai sinusoïdal, un accumulateur de phase 21 et une mémoire 22 contenant la fonction sinus. Les moyens 1 de génération d'échantillons numériques du signal sinusoïdal à synthétiser reçoivent un mot numérique de commande de la fréquence, appelé par la suite mot de fréquence, et un signal d'horloge. Ce mot de fréquence est fourni à l'accumulateur de phase 21. Ce dernier comporte par exemple un générateur de rampes de valeurs numérisées délivrées au bus d'adresses de la mémoire 22 de la fonction sinus. Une rampe numérisée est une suite de valeurs numériques croissant régulièrement jusqu'à une valeur donnée, puis retombant directement à zéro pour croître de nouveau et ainsi de suite, de façon analogue aux rampes analogiques connues. A chaque mot de fréquence correspond une rampe numérisée. En fonction du déroulement des valeurs de rampe présentes sur son bus d'adresses, la mémoire 22 délivre en sortie un signal sinusoïdal échantillonné à la fréquence d'horloge. Le bus de sortie de la mémoire 22 comporte N bits. Le signal numérique échantillonné est donc codé sur N bits. C'est ce signal qui doit par la suite être converti en signal analogique sinusoïdal. La sortie de la mémoire 22 constitue la sortie des moyens 1 de génération des échantillons du signal à synthétiser.

La figure 1 montre qu'un synthétiseur selon l'invention comporte par exemple un additionneur 4. Ce dernier additionne le signal utile, codé sur N bits, et le signal fourni par les moyens 2 de génération de bruit, aussi codé sur N bits. Les amplitudes du signal utile et du signal de bruit sont par exemple définies de façon à ce que le résultat de l'addition soit codé sur N bits sans débordement. La sortie de l'additionneur 4 est par exemple reliée à l'entrée de moyens de troncature 5. La troncature consiste simplement à retenir les M bits de poids fort et à abandonner les (N-M) bits de poids faible, M étant inférieur à N. Ainsi, le signal issu de l'additionneur 4 est alors par exemple tronqué à M bits de poids forts, M étant inférieur à N, pour s'adapter à la dynamique du convertisseur numérique-analogique 3 dont l'entrée est reliée à la sortie des moyens de troncature 5.

Les moyens de génération de bruit 2 ont notamment un double rôle. Ils permettent de décorréler les erreurs dues à la troncature de N bits à M bits du signal utile, en étalant notamment l'énergie de ces erreurs dans le spectre de fréquence. Mais surtout, ils améliorent la pureté spectrale du synthétiseur en réduisant l'effet des non-linéarités du convertisseur numérique-analogique 3.

La figure 4 illustre, par un synoptique, un exemple de réalisation possible des moyens de génération de bruit 2. Par ces moyens, un bruit blanc échantillonné et équiprobable est créé, la fréquence d'échantillonnage est par exemple égale à la moitié de la fréquence d'échantillonnage du signal utile. Puis, ce bruit est soumis à des non-linéarités de façon à augmenter la probabilité d'apparition pour les valeurs d'amplitudes extrêmes, à réduire la probabilité d'apparition des amplitudes médianes, et à annuler la probabilité à l'extérieur de l'intervalle [Aₘᵢₙ, Aₘₐₓ] précité. Un échantillon à zéro est ensuite ajouté entre deux échantillons de bruit. Puis, un filtrage symétrique et décalé d'une demi-période d'échantillonnage du bruit est effectué, ce filtrage est par exemple en sin(x)/x pondéré. Pour finir, le bruit est par exemple transposé autour de la fréquence d'horloge divisée par 2, cette fréquence étant la fréquence d'échantillonnage. Ainsi, les moyens de génération de bruit 3 tels qu'illustrés par la figure 4 comportent des moyens de génération de bruit blanc échantillonné 31, suivi de moyens de création de non-linéarité 32, lesquels sont suivis de moyens 33 d'interposition d'un zéro entre deux échantillons de bruits. Le bruit créé par ces derniers est ensuite filtré par des moyens 34, de filtrage par exemple en sin(x)/x pondéré et décalé d'une demi-période d'échantillonnage, ces moyens 34 étant suivis de moyens 35 de transposition du signal ainsi filtré autour de la fréquence d'échantillonnage divisée par deux, cette fréquence d'échantillonnage étant par ailleurs imposée par une horloge.

Les moyens de création de bruit blanc échantillonné sont par exemple constitués d'un générateur pseudo-aléatoire. Les moyens de création de non-linéarité sont par exemple constitués de moyens numériques de transcodage présentant une loi entre l'entrée et la sortie non linéaire. L'interposition d'un zéro entre deux échantillons de bruit est par exemple réalisée par un microprocesseur ou tout autre circuit de traitement numérique. Les moyens 34 de filtrage en sin(x)/x pondéré et décalé d'une demi-période d'échantillonnage sont par exemple réalisés numériquement. Ce filtrage peut être remplacé par tout filtre à réponse impulsionnelle symétrique. Enfin, les moyens 35 de transposition autour de la moitié de la fréquence d'horloge sont par exemple constitués de moyens réalisant une multiplication des échantillons alternativement par +1 et par -1.

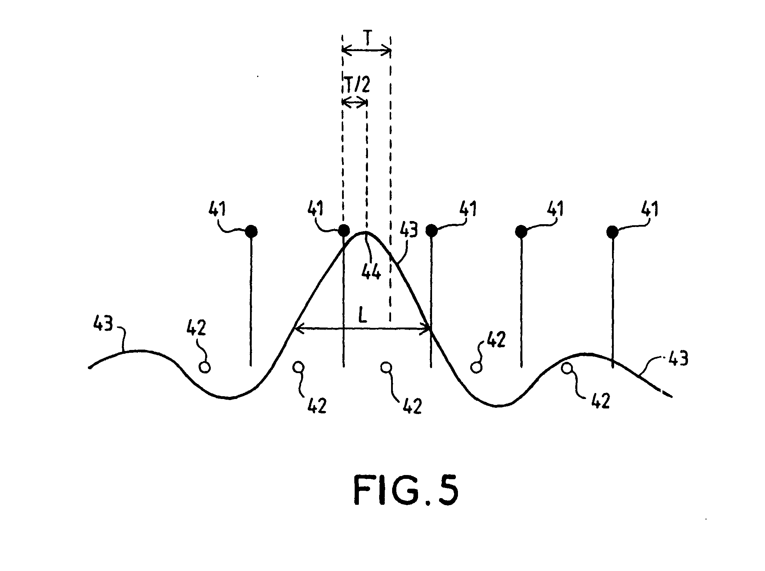

La figure 5 illustre les échantillons de bruit par rapport au filtrage en sin(x)/x. Les échantillons de bruits représentés sont ceux créés après interposition des zéros. Ainsi, le signal de bruit représenté comporte les échantillons 41 ayant subi par exemple les non-linéarités. Des zéros 42 sont intercalés entre les échantillons précédents 41, la période entre un échantillon non nul 41 et un zéro étant égale à la période d'échantillonnage T du signal utile. Une courbe 43 en sin(x)/x représente la réponse impulsionnelle du filtre des moyens de filtrage 34. Le sommet 44 de cette courbe 43 est décalé d'une demi-période d'échantillonnage T/2 par rapport à un échantillon de bruit non nul 41. Par ailleurs, la largeur L du lobe principal de la réponse impulsionnelle du filtre joue sur la raideur de l'histogramme 11. En d'autres termes, plus cette largeur est étroite, plus les pentes 111, 112 de l'histogramme, tel que représenté par exemple par la figure 2, sont raides, c'est-à-dire que plus la probabilité d'apparition P du bruit passe plus vite de zéro à la valeur de plateau 110, de même pour le passage inverse vers zéro. Par contre, un lobe étroit donne un spectre large, ce qui peut conduire à faire un compromis sur la largeur du lobe. Le bruit est ainsi parfaitement localisé et n'empiète pas sur la bande des signaux utiles. Il est donc possible de filtrer après la conversion numérique-analogique. Par ailleurs, une forte valeur du bruit, ainsi qu'un histogramme qui est ainsi proche d'une forme carrée, permet de bien lisser les non-linéarités, et donc de les supprimer. Ce résultat est d'autant meilleur que l'histogramme est stationnaire. Dans le cas présent, un histogramme est stationnaire s'il reste le même, quelque soit le sous-groupe d'échantillons de bruit. La forme de l'histogramme, ainsi que sa qualité stationnaire, est avantageusement obtenue notamment par les moyens 33 d'interposition d'un zéro entre deux échantillons et par le filtrage symétrique et décalé d'un demi-échantillon 34.

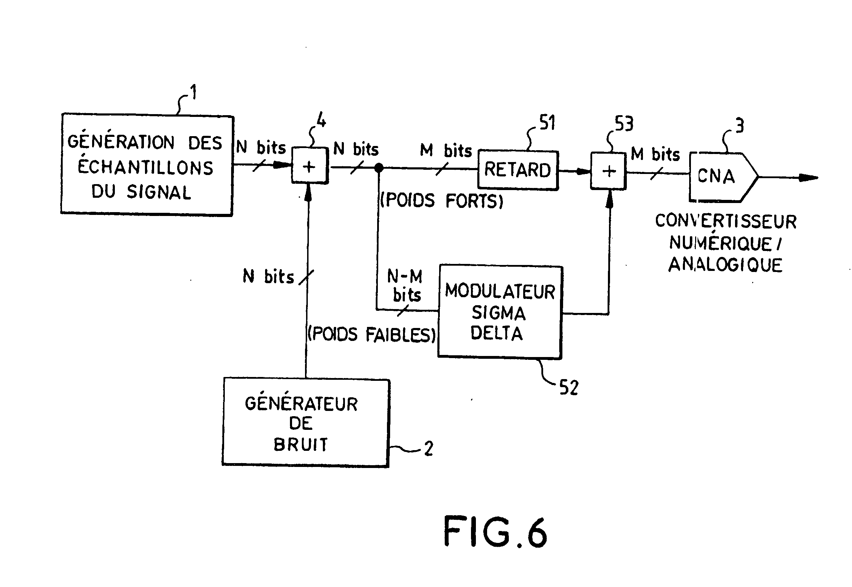

La figure 6 présente, par un synoptique, un autre mode de réalisation possible d'un synthétiseur selon l'invention. Dans ce mode de réalisation, un modulateur sigma-delta est utilisé pour éliminer l'erreur de troncature constituée du passage de N bits à M bits pour le signal utile. La troncature est par exemple ici réalisée en sortie de l'additionneur 4 qui réalise la somme du signal utile et du signal de bruit. Il est bien sûr que s'il y a des non-linéarités, il n'est pas utile de chercher à supprimer les erreurs de troncature, car les raies parasites de troncature restent noyées dans les autres raies parasites, notamment celles dues aux non-linéarités. Mais, dès lors où l'utilisation du générateur de bruit 2 tel que décrit précédemment permet de supprimer les non-linéarités, il devient avantageux d'ajouter, dans un dispositif selon l'invention, un modulateur sigma-delta tel que cela est décrit par la suite, pour supprimer les raies parasites de troncature.

Le synthétiseur comporte toujours des moyens 1 de génération du signal utile et des moyens de génération de bruit 2 dont les sorties, codées sur N bits, sont additionnées par l'additionneur 4. Le synthétiseur comporte toujours un convertisseur numérique-analogique 3 en sortie. Les moyens de génération de bruit 2 sont par exemple du type de ceux de la figure 5. Les défauts dus aux non-linéarités du convertisseur numérique-analogique 3 sont notamment traitées par ces moyens de génération de bruit 2. Le résultat de l'addition du signal utile et du signal de bruit est codé sur N bits, car on choisit l'amplitude et le décalage du signal utile pour éviter les débordements. Ce décalage sera appelé par la suite sous le terme connu d'offset. Le bus de N bits en sortie de l'additionneur 4 est divisé en deux parties. Un premier bus comportant les M bits de poids fort entre dans un module de retard 51. Un deuxième bus comportant les N-M bits de poids faible entre dans le modulateur sigma-delta 52. Le module de retard 51 compense le retard introduit par le modulateur sigma-delta pour le traitement des N-M bits de poids faible. La sortie du modulateur sigma-delta 52 est additionnée à la sortie du module à retard 51 par un deuxième additionneur 53. Le résultat de l'addition, codé sur M bits, est converti en signal analogique par le convertisseur numérique-analogique 3. Le signal est notamment codé sur M bits car on prend soin d'éviter les débordements en choisissant de façon adéquate l'amplitude et l'offset du signal utile et du signal de bruit.

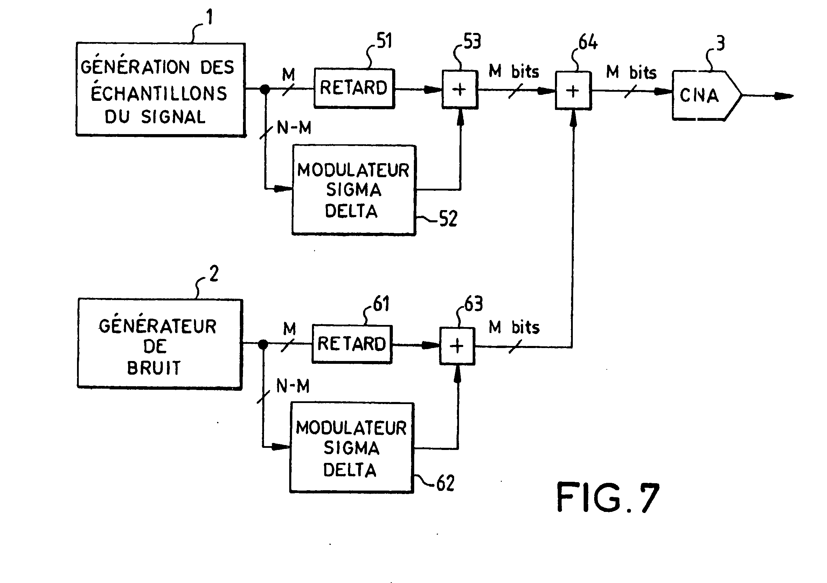

La figure 7 présente, par un synoptique, un autre exemple de réalisation possible d'un synthétiseur selon l'invention. Dans ce mode de réalisation, deux modulateurs sigma-delta 52, 62 sont utilisés de façon à éliminer indépendamment les erreurs de troncature sur le signal utile et les erreurs de troncature sur le signal de bruit avant que l'addition de ces deux signaux soit effectuée, le signal utile et le signal de bruit étant tronqués avant cette addition. Le signal utile étant codé sur N bits, ie bus de sortie des moyens 1 de génération de ce signal est divisé en deux parties. Un premier bus comportant les M bits de poids forts entre dans un premier module de retard 51. Un deuxième bus comportant les N-M bits de poids faibles entre dans le premier modulateur sigma-delta 52. Le module de retard 51 compense le retard introduit par le modulateur sigma-delta pour le traitement des N-M bits de poids faibles. La sortie du modulateur sigma-delta 52 est additionnée à la sortie du module à retard 51 par un premier additionneur 53. De même, le signal fourni par les moyens de génération de bruit 2 étant codé sur N bits, le bus de sortie de ces moyens est divisé en deux parties. Un premier bus comportant les M bits de poids forts du signal de bruit entre dans un deuxième module de retard 61. Un deuxième bus comportant les N-M bits de poids faibles du signal utile entre dans le deuxième modulateur sigma-delta 62. Le module de retard 61 compense le retard introduit par le modulateur sigma-delta pour le traitement des N-M bits de poids faibles. La sortie du deuxième modulateur sigma-delta 62 est additionnée à la sortie du deuxième module de retard 61 par un deuxième additionneur 63. Les résultats des additions, en sortie des premier et deuxième additionneurs 53, 63, codé sur M bits, sont additionnés par un troisième additionneur 64. Le résultat de l'addition, fourni par ce dernier et codé par exemple sur M+1 bits, est converti en un signal analogique par le convertisseur numérique-analogique 3. Dans cet arrangement, il est nécessaire de choisir l'amplitude et l'offset du signal utile et du signal de bruit de façon à ce que les additions 53, 63 ne génèrent pas de débordements. Un intérêt d'un mode de réalisation selon la figure 7 réside notamment dans le fait qu'il permet un gain en puissance de calcul dans le cas où le bruit est généré par calcul et enregistré par exemple dans une mémoire à lecture seule. Cela permet notamment d'économiser le matériel nécessaire pour le modulateur sigma-delta, le retard 61 et l'additionneur 63, car l'action de ce dispositif est intégré dans les moyens de calcul.

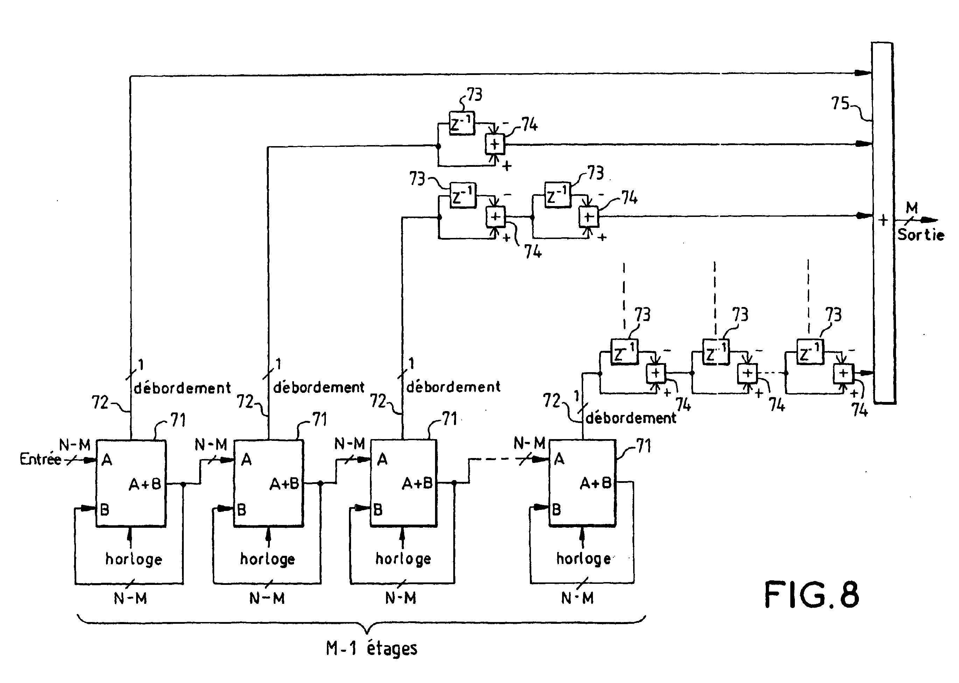

La figure 8 illustre par un synoptique un exemple de modulateur sigma-delta 52, 62 pouvant être implanté dans un dispositif selon l'invention.

Le modulateur sigma-delta 21 selon la figure 8 est par exemple composé de M-1 étages d'accumulation 71 qui sont connectés en cascade, c'est-à-dire que l'entrée de l'étage d'ordre P est la sortie de l'étage P-1. Le nombre d'étages du modulateur correspond à son ordre. Ce nombre d'étages d'accumulation 71 doit être par exemple choisi de façon à ce que l'amplitude en sortie du modulateur sigma-delta 52, 62 soit un ordre de grandeur inférieur à l'amplitude du signal de bruit généré 2, pour ne pas perturber l'histogramme des amplitudes de bruit. Un ordre de grandeur correspond par exemple ici à un rapport 10. Chaque étage d'accumulation 71 possède une sortie 72 de débordement. Ces dernières sont combinées entre elles par un additionneur 75, via des étages de différentiation 73, 74, pour donner le signal de sortie du modulateur sigma-delta 21 codé sur M bits. Un étage de différentiation comporte un élément de retard 73 et un élément soustracteur 74. L'élément de retard 73, par exemple à base de bascules D, a notamment pour fonction de permettre la synchronisation des opérations à l'intérieur du modulateur 21. L'entrée d'un étage de différentiation attaque l'entrée de l'élément de retard 73 et l'entrée positive de l'élément soustracteur 74. La sortie de l'élément de retard attaque l'entrée négative de l'élément soustracteur, qui retranche le signal retardé au signal d'entrée. Un étage d'accumulation 71 comporte une première entrée A et une deuxième entrée B codées sur N-M bits et une sortie A+B codée sur N-M bits qui présente l'addition des deux entrées A, B. Cette sortie attaque à la fois la première entrée A de l'étage suivant et la deuxième sortie B de son étage par rebouclage. L'entrée du modulateur est la première entrée A du premier étage. Pour chaque étage, le bit de débordement 72 de l'addition A+B attaque l'entrée d'un premier étage de différentiation 73, 74 d'une chaîne de P-1 étages de différentiation, P étant l'ordre de l'étage d'accumulation 71. L'additionneur 75 additionne les sorties de toutes les chaînes. Le bit de débordement du premier étage d'accumulation attaque directement l'additionneur 75. La sortie du premier étage de différentiation d'une chaîne est -1, 0 ou +1. Chaque étage de différentiation 73,74 peut doubler la valeur de son entrée.

L'invention permet donc de supprimer efficacement les non-linéarités, tout en éliminant par ailleurs les bruits de troncature, sans augmentation notable de la puissance de calcul. L'invention est par ailleurs simple à mettre en oeuvre puisqu'elle n'utilise notamment que des composants, notamment numériques, peu complexes au niveau matériel. En ce qui concerne l'aspect logiciel, une fois les programmes réalisés, ceux-ci sont implantés dans les composants, ces programmes n'étant par ailleurs pas particulièrement complexes à réaliser.

## Revendications

1. Synthétiseur de signaux comportant des moyens (1) de génération des échantillons d'un signal numérique utile à convertir, codé sur N bits, en signal analogique en fonction d'un mot de commande de fréquence, des moyens (2) de génération d'un signal de bruit, et un convertisseur numérique-analogique (3), le signal utile (12) et le signal de bruit étant additionnés par un additionneur (4, 64), M bits de poids forts du résultat de l'addition étant convertis en signal analogique par le convertisseur numérique-analogique(3), M étant inférieur à N, les moyens de génération d'un signal de bruit comportant au moins des moyens (31) de génération d'un bruit blanc échantillonné et équiprobable, **caractérisé en ce que** le signal de bruit est aussi codé sur N bits et **en ce que** les moyens de génération du signal de bruit comportent en plus ou moins des moyens (33) d'interposition d'un zéro entre deux échantillons de bruit et des moyens (34) de filtrage, à réponse impulsionnelle symétrique, des échantillons avec décalage d'une demi-période d'échantillonnage (T/2), de façon à ce que le bruit présente au moins une densité de bruit sensiblement égale à une loi équiprobable (110), cette densité étant nulle en dehors d'un espace donné (Aₘᵢₙ, Aₘₐₓ), et l'histogramme (11) du bruit étant stationnaire.

2. Synthétiseur selon la revendication 1, **caractérisé en ce que** l'amplitude du signal de bruit (Aₘᵢₙ, Aₘₐₓ) est sensiblement égale à l'amplitude du signal utile (12).

3. Synthétiseur selon la revendication 1, **caractérisé en ce que** l'amplitude du signal de bruit (Aₘᵢₙ, Aₘₐₓ) est supérieure à l'amplitude du signal utile (12).

4. Synthétiseur selon l'une quelconque des revendications précédentes, **caractérisé en ce que** les moyens (2) de génération d'un signal de bruit comportent des moyens (35) de transposition du signal filtré autour de la fréquence d'échantillonnage divisée par deux.

5. Synthétiseur selon l'une quelconque des revendications précédentes, **caractérisé en ce que** les moyens (2) de génération d'un signal de bruit comportent, en sortie des moyens (31) de génération d'un bruit blanc, des moyens de création de non-linéarités.

6. Synthétiseur selon l'une quelconque des revendications précédentes, **caractérisé en ce que** les moyens de filtrage (34) réalisent un filtrage en sin(x)/(x).

7. Synthétiseur selon l'une quelconque des revendications précédentes, **caractérisé en ce que** le signal en sortie de l'additionneur (4) codé sur N bits étant tronqué à M bits, M étant inférieur à N, il comporte un modulateur sigma-delta (52), le résultat de l'addition du signal utile et du signal de bruit étant codé sur N bits, le bus de N bits en sortie de l'additionneur (4) étant divisé en deux parties :
- un premier bus comportant les M bits de poids forts entrant dans un module de retard (51) ;
- un deuxième bus comportant les N-M bits de poids faibles entrant dans le modulateur sigma-delta (52), le module de retard (51) compensant le retard introduit par le modulateur sigma-delta pour le traitement des N-M bits de poids faibles, la sortie du modulateur sigma-delta (52) étant additionnée à la sortie du module à retard (51) par un deuxième additionneur (53), le résultat de l'addition, codé sur M bits, étant converti en signal analogique par le convertisseur numérique-analogique (3).

8. Synthétiseur selon l'une quelconque des revendications 1 à 6, **caractérisé en ce que** le signal utile et le signal de bruit codé sur N bits étant tronqués à M bits, M étant inférieur à N, il comporte deux modulateurs sigma-delta (52, 62), le signal utile étant codé sur N bits, le bus de sortie des moyens (1) de génération de ce signal étant divisé en deux parties :
- un premier bus comportant les M bits de poids forts entrant dans un premier module de retard (51) ;
- un deuxième bus comportant les N-M bits de poids faibles entrant dans le premier modulateur sigma-delta (52), le module de retard (51) compensant le retard introduit par le modulateur sigma-delta pour le traitement des N-M bits de poids faibles, la sortie du modulateur sigma-delta (52) étant additionnée à la sortie de module à retard (51) par un premier additionneur (53) ;
le signal fourni par les moyens de génération de bruit (2) étant codé sur N bits, le bus de sortie de ces moyens étant divisé en deux parties :
- un premier bus comportant les M bits de poids forts du signal de bruit entrant dans un deuxième module de retard (61);
- un deuxième bus comportant les N-M bits de poids faibles du signal utile entrant dans le deuxième modulateur sigma-delta (62), le deuxième module de retard (61) compensant le retard introduit par ie modulateur sigma-delta (62) pour le traitement des N-M bits de poids faibles, la sortie du deuxième modulateur sigma-delta (62) étant additionnée à la sortie du deuxième module de retard 61 par un deuxième additionneur (63) ;
les résultats des additions, en sortie des premier et deuxième additionneurs (53, 63), codés sur M bits, étant additionnés par un troisième additionneur (64), le résultat de l'addition, fournie par ce dernier et codé sur M+1 bits, étant converti en un signal analogique par le convertisseur numérique-analogique (3).

9. Synthétiseur selon l'une quelconque des revendications 6 ou 7, **caractérisé en ce que** le nombre maximal d'étages d'accumulation (71) du modulateur sigma-delta (52, 62) est choisi de façon à ce que l'amplitude du signal en sortie du modulateur sigma-delta (52, 62) soit un ordre de grandeur inférieur à l'amplitude du bruit généré par le générateur (2).

## Claims

1. Signal synthesizer comprising means (1) of generating samples of a useful digital signal to be converted, encoded on N bits, into an analogue signal according to a frequency control word, means (2) of generating a noise signal, and a digital-analogue converter (3), the useful signal (12) and the noise signal being added by an adder (4, 64), M most significant bits of the result of the addition being converted into an analogue signal by the digital-analogue converter (3), M being less than N, the means of generating a noise signal comprising at least means (31) of generating a sampled and equiprobable white noise, **characterized in that** the noise signal is also encoded on N bits and that the means of generating the noise signal also comprise at least means (33) of inserting a zero between two noise samples and means (34) of filtering, with symmetrical impulse response, samples with an offset of a half sampling period (T/2) so that the noise presents at least a noise density roughly equal to the equiprobable law (110), this density being zero outside a given space (Aₘᵢₙ, Aₘₐₓ), and the noise histogram (11) being stationary.

2. Synthesizer according to Claim 1, **characterized in that** the amplitude of the noise signal (Aₘᵢₙ, Aₘₐₓ) is roughly equal to the amplitude of the useful signal (12).

3. Synthesizer according to Claim 1, **characterized in that** the amplitude of the noise signal (Aₘᵢₙ, Aₘₐₓ) is greater than the amplitude of the useful signal (12).

4. Synthesizer according to any one of the preceding claims, **characterized in that** the means (2) of generating a noise signal comprise means (35) of transposing the filtered signal about the sampling frequency divided by two.

5. Synthesizer according to any one of the preceding claims, **characterized in that** the means (2) of generating a noise signal comprise, at the output of the white noise generating means (31), means of creating non-linearities.

6. Synthesizer according to any one of the preceding claims, **characterized in that** the filtering means (34) provide a sin (x)/(x) filtering.

7. Synthesizer according to any one of the preceding claims, **characterized in that**, since the signal at the output of the adder (4) encoded on N bits is truncated to M bits, M being less than N, it comprises a sigma-delta modulator (52), the result of the addition of the useful signal and the noise signal being encoded on N bits, the N-bit bus at the output of the adder (4) being divided into two parts:
- a first bus comprising the M most significant bits to the input of a delay module (51);
- a second bus comprising the N-M least significant bits to the input of the sigma-delta modulator (52), the delay module (51) offsetting the delay introduced by the sigma-delta modulator for the processing of the N-M least significant bits, the output of the sigma-delta modulator (52) being added to the output of the delay module (51) by a second adder (53), the result of the addition, encoded on M bits, being converted into an analogue signal by the digital-analogue converter (3).

8. Synthesizer according to any one of Claims 1 to 6, **characterized in that**, since the useful signal and the noise signal encoded on N-bits are truncated to M bits, M being less than N, it comprises two sigma-delta modulators (52, 62), the useful signal being encoded on N bits, the output bus of the means (1) of generating this signal being divided into two parts:
- a first bus comprising the M most significant bits to the input of a first delay module (51);
- a second bus comprising the N-M least significant bits to the input of the first sigma-delta modulator (52), the delay module (51) offsetting the delay introduced by the sigma-delta modulator for the processing of the N-M least significant bits, the output of the sigma-delta modulator (52) being added to the output of the delay module (51) by a first adder (53) ;
the signal supplied by the noise generation means (2) being encoded on N bits, the output bus of these means being divided into two parts:
- a first bus comprising the M most significant bits of the noise signal to the input of a second delay module (61);
- a second bus comprising the N-M least significant bits of the useful signal to the input of the second sigma-delta modulator (62), the second delay module (61) offsetting the delay introduced by the sigma-delta modulator (62) for the processing of the N-M least significant bits, the output of the second sigma-delta modulator (62) being added to the output of the second delay module (61) by a second adder (63);
the results of the additions, at the output of the first and second adders (53, 63), encoded on M bits, being added by a third adder (64), the result of the addition, supplied by the latter and encoded on M+1 bits, being converted into an analogue signal by the digital-analogue converter (3).

9. Synthesizer according to either of Claims 6 or 7, **characterized in that** the maximum number of accumulation stages (71) of the sigma-delta modulator (52, 62) is chosen such that the amplitude of the signal at the output of the sigma-delta modulator (52, 62) is an order of magnitude less than the amplitude of the noise generated by the generator (2).

## Patentansprüche

1. Signalsynthetisierer, der Mittel (1) zur Erzeugung der Tastproben eines mit N Bits codierten digitalen Nutzsignals, das in Abhängigkeit von einem Frequenzsteuerwort in ein analoges Signal umzuwandeln ist, Mittel (2) zur Erzeugung eines Rauschsignals und einen Digital-Analog-Wandler (3) aufweist, wobei das Nutzsignal (12) und das Rauschsignal von einem Addierglied (4, 64) addiert werden, wobei M höherwertige Bits des Ergebnisses der Addition vom Digital-Analog-Wandler (3) in ein analoges Signal umgewandelt werden, wobei M niedriger ist als N, wobei die Mittel zur Erzeugung eines Rauschsignals mindestens Mittel (31) zur Erzeugung eines getasteten und gleichwahrscheinlichen weißen Rauschens aufweisen, **dadurch gekennzeichnet, dass** das Rauschsignal auch mit N Bits codiert ist, und dass die Mittel zur Erzeugung des Rauschsignals außerdem mindestens Mittel (33) zur Zwischenfügung einer Null zwischen zwei Rauschtastproben und Mittel (34) zur Filterung, mit symmetrischer Impulsantwort, der Tastproben mit Verzögerung um eine halbe Tastperiode (T/2) aufweisen, damit das Rauschen mindestens eine Rauschdichte aufweist, die im Wesentlichen gleich einem gleichwahrscheinlichen Gesetz (110) ist, wobei diese Dichte außerhalb eines gegebenen Raums (Aₘᵢₙ, Aₘₐₓ) Null und das Histogramm (11) des Rauschens stationär ist.

2. Synthetisierer nach Anspruch 1, **dadurch gekennzeichnet, dass** die Amplitude des Rauschsignals (Aₘᵢₙ, Aₘₐₓ) im Wesentlichen gleich der Amplitude des Nutzsignals (12) ist.

3. Synthetisierer nach Anspruch 1, **dadurch gekennzeichnet, dass** die Amplitude des Rauschsignals (Aₘᵢₙ, Aₘₐₓ) größer als die Amplitude des Nutzsignals (12) ist.

4. Synthetisierer nach einem der vorhergehenden Ansprüche, **dadurch gekennzeichnet, dass** die Mittel (2) zur Erzeugung eines Rauschsignals Mittel (35) zur Umsetzung des gefilterten Signals um die halbierte Tastfrequenz herum aufweisen.

5. Synthetisierer nach einem der vorhergehenden Ansprüche, **dadurch gekennzeichnet, dass** die Mittel (2) zur Erzeugung eines Rauschsignals am Ausgang der Mittel (31) zur Erzeugung eines weißen Rauschens Mittel zur Erzeugung von NichtLinearitäten aufweisen.

6. Synthetisierer nach einem der vorhergehenden Ansprüche, **dadurch gekennzeichnet, dass** die Filtermittel (34) eine sin(x)/(x)-Filterung durchführen.

7. Synthetisierer nach einem der vorhergehenden Ansprüche, **dadurch gekennzeichnet, dass** er, da das mit N Bits codierte Signal am Ausgang des Addierglieds (4) auf M Bits gestutzt ist, wobei M niedriger ist als N, einen Sigma-Delta-Modulator (52) aufweist, wobei das Ergebnis der Addition des Nutzsignals und des Rauschsignals mit N Bits codiert ist, wobei der Bus von N Bits am Ausgang des Addierglieds (4) in zwei Teile geteilt ist:
- einen ersten Bus, der die M höherwertigen Bits enthält, die einem Verzögerungsmodul (51) zugeführt werden;
- einen zweiten Bus, der die N-M niederwertigen Bits enthält, die dem Sigma-Delta-Modulator (52) zugeführt werden, wobei der Verzögerungsmodul (51) die vom Sigma-Delta-Modulator eingeführte Verzögerung für die Verarbeitung der N-M niederwertigen Bits kompensiert, wobei das Ausgangssignal des Sigma-Delta-Modulators (52) von einem zweiten Addierglied (53) zum Ausgangssignal des Verzögerungsmoduls (51) addiert wird, wobei das mit M Bits codierte Ergebnis der Addition vom Digital-Analog-Wandler (3) in ein analoges Signal umgewandelt wird.

8. Synthetisierer nach einem der Ansprüche 1 bis 6, **dadurch gekennzeichnet, dass** er, da das Nutzsignal und das mit N Bits codierte Rauschsignal auf M Bits gestutzt sind, wobei M niedriger ist als N, zwei Sigma-Delta-Modulatoren (52, 62) aufweist, wobei das Nutzsignal mit N Bits codiert ist, wobei der Ausgangsbus der Mittel (1) zur Erzeugung dieses Signals in zwei Teile geteilt ist:
- einen ersten Bus, der die M höherwertigen Bits enthält, die einem ersten Verzögerungsmodul (51) zugeführt werden;
- einen zweiten Bus, der die N-M niederwertigen Bits enthält, die dem ersten Sigma-Delta-Modulator (52) zugeführt werden, wobei der Verzögerungsmodul (51) die vom Sigma-Delta-Modulator eingeführte Verzögerung für die Verarbeitung der N-M niederwertigen Bits kompensiert, wobei das Ausgangssignal des Sigma-Delta-Modulators (52) von einem ersten Addierglied (53) zum Ausgangssignal des Verzögerungsmoduls (51) addiert wird;
wobei das von den Mitteln zur Rauscherzeugung (2) gelieferte Signal mit N Bits codiert ist, wobei der Ausgangsbus dieser Mittel in zwei Teile geteilt ist:
- einen ersten Bus, der die M höherwertigen Bits des Rauschsignals aufweist, die einem zweiten Verzögerungsmodul (61) zugeführt werden;
- einen zweiten Bus, der die N-M niederwertigen Bits des Nutzsignals enthält, die dem zweiten Sigma-Delta-Modulator (62) zugeführt werden, wobei der zweite Verzögerungsmodul (61) die vom Sigma-Delta-Modulator (62) eingeführte Verzögerung für die Verarbeitung der N-M niederwertigen Bits kompensiert, wobei das Ausgangssignal des zweiten Sigma-Delta-Modulators (62) von einem zweiten Addierglied (63) zum Ausgangssignal des zweiten Verzögerungsmoduls (61) addiert wird;
wobei die mit M Bits codierten Ergebnisse der Additionen am Ausgang des ersten und des zweiten Addierglieds (53, 63) von einem dritten Addierglied (64) addiert werden, wobei das Ergebnis der Addition, das von diesem letzteren geliefert wird und mit M+1 Bits codiert ist, vom Digital-Analog-Wandler (3) in ein analoges Signal umgewandelt wird.

9. Synthetisierer nach einem der Ansprüche 6 oder 7, **dadurch gekennzeichnet, dass** die maximale Anzahl von Akkumulationsstufen (71) des Sigma-Delta-Modulators (52, 62) so gewählt wird, dass die Amplitude des Signals am Ausgang des Sigma-Delta-Modulators (52, 62) in einer niedrigeren Größenordnung liegt als die Amplitude des vom Generator (2) erzeugten Rauschens.
